# DEMANDE DE BREVET EUROPEEN

(11) **EP 1 228 983 A1**
(43) Date de publication de la demande: **07.08.2002**
(21) Numéro de dépôt: 02356014.7
(22) Date de dépôt: 30.01.2002
(51) Int. Cl.: B65D 85/78, A23G 9/10, A23G 9/08, A23G 9/00

(54) **Procédé de fabrication d'un produit alimentaire glacé emballé et produit ainsi obtenu**

(30) Priorité: 31.01.2001 FR 0101326
(71) Demandeur: Etablissements Garnier, 69780 Mions (FR)
(72) Inventeur: Garnier, Patrick, 69110 Sainte Foy Les Lyon (FR)
(74) Mandataire: Schouller, Jean-Philippe

(57) **Abrégé**

Selon ce procédé :
- on déverse une denrée alimentaire sucrée, sensiblement libre d'air, à l'état liquide, dans une partie du récipient souple (2), de manière à ménager un volume libre dans ce récipient,
- on obture ledit récipient (2),
- on incline, par rapport à la verticale (Y-Y'), un axe principal (A) dudit récipient, tout en maintenant la denrée alimentaire dans son état liquide (12) ; et
- on refroidit la denrée alimentaire dans la position inclinée dudit récipient, de manière à l'amener dans son état glacé et à réaliser une face libre de ladite denrée glacée, ladite face libre étant séparée d'une paroi en regard du récipient souple par un espace intercalaire.

Cette denrée peut être malaxée depuis les faces du récipient, de façon à être aisément découpée en portions.

## Description

La présente invention concerne un procédé de fabrication d'un produit alimentaire glacé emballé, ainsi qu'un produit alimentaire glacé emballé correspondant.

L'invention vise un tel produit, comprenant un récipient et une denrée alimentaire glacée sucrée. Cette dernière peut être entre autres un sorbet, à base notamment de fruits et de sucre, une crème glacée, à base notamment de lait, de crème et de sucre, ou bien encore une glace aux oeufs, à base notamment de lait, d'oeufs et de sucre. Cette denrée glacée peut également renfermer de l'alcool.

De manière classique, la préparation d'un tel produit alimentaire glacé emballé consiste tout d'abord à préparer un mélange des composants évoqués ci-dessus, auquel on ajoute des stabilisants et émulsifiants. Puis, on soumet le mélange à une pasteurisation à environ 85°C et à un refroidissement, de manière à obtenir le produit final, qui est stocké, après conditionnement, entre -22 et -25°C. Ces opérations s'accompagnent d'une phase d'emprisonnement d'air dans la denrée même, qui est appelée foisonnement.

L'incorporation d'air évoquée ci-dessus a pour but principal de permettre de découper en portions, ou portionner, de manière aisée la denrée glacée, à une température usuelle de consommation, aux environs de -15°C. Cet ajout d'air présente cependant plusieurs inconvénients. En effet, il induit une diminution de la saveur de cette denrée, de façon proportionnelle à sa teneur en air, ce dernier étant insipide.

De plus, cet air contribue à augmenter, du fait de la place qu'il occupe, le volume total du produit glacé emballé, ce qui est désavantageux notamment en ce qui concerne les coûts de conditionnement et de stockage. Enfin, il est nécessaire de faire appel à un dispositif mécanique, dénommé foisonneur, qui présente un coût élevé et n'autorise que de faibles débits de sortie de la denrée glacée.

Afin de remédier aux différents inconvénients précités, l'invention se propose de mettre en oeuvre un procédé de fabrication d'un produit alimentaire glacé emballé qui, tout en conférant à la denrée glacée qu'il contient un caractère aisément portionnable, permet de s'affranchir substantiellement de toute présence d'air dans cette denrée.

A cet effet, elle a pour objet un procédé de fabrication d'un produit alimentaire glacé emballé, ledit produit emballé comprenant un récipient souple et une denrée alimentaire glacée sucrée, notamment un sorbet ou une crème glacée, ledit procédé comportant les phases suivantes :
- on déverse ladite denrée alimentaire, sensiblement libre d'air, à l'état liquide, dans une partie du récipient souple, de manière à ménager un volume libre dans ce récipient,
- on obture ledit récipient,
- on incline, par rapport à la verticale, un axe principal dudit récipient, tout en maintenant la denrée alimentaire dans son état liquide, de sorte que la face supérieure de ladite denrée liquide s'étend à distance d'au moins une partie d'une paroi en regard du récipient souple ; et
- on refroidit la denrée alimentaire dans la position inclinée dudit récipient, de manière à amener cette denrée dans son état glacé et à réaliser une face libre de ladite denrée glacée, ladite face libre étant séparée de ladite paroi en regard du récipient souple par un espace intercalaire.

L'invention permet de réaliser les objectifs précédemment mentionnés.

Etant donné que la denrée alimentaire est admise dans le récipient en étant sensiblement dépourvue d'air, elle possède une saveur optimale et un volume restreint. De plus, conformément à l'invention, cette denrée glacée est aisément portionnable. En effet, la paroi malléable du récipient s'étendant au voisinage de la face libre de la denrée glacée permet à un utilisateur, après avoir ôté le bouchon, de malaxer la denrée glacée à partir de la face libre et de la face qui lui est opposée, en déformant la paroi précitée.

Ce malaxage conduit à une déstructuration de la denrée glacée contenue dans le récipient, de sorte que l'utilisateur est ensuite à même soit de portionner aisément la glace, par exemple au moyen d'une cuillère, soit de déverser par gravité, au travers du goulot, la denrée glacée ainsi déstructurée.

L'invention est particulièrement avantageuse dans le cas où la denrée glacée renferme de l'alcool. Ainsi, du fait de la différence de leurs points de congélation, cette denrée et l'alcool sont peu facilement miscibles, en particulier lorsqu'on fait appel au foisonnement. Conformément à l'invention, grâce au malaxage et de l'absence de foisonnement, cette séparation de phases intervenant entre la denrée glacée et l'alcool est évitée dans une large mesure.

Selon une première variante avantageuse de l'invention, on incline l'axe principal du récipient selon un angle aigu par rapport à l'horizontale, de sorte que l'espace intercalaire est mis en communication avec le débouché du goulot du récipient. Ceci permet un malaxage particulièrement aisé du récipient souple, conduisant à une déstructuration efficace de la denrée glacée. Une telle mesure garantit à l'utilisateur une consommation simple et pratique de cette denrée alimentaire glacée.

L'angle aigu précité peut être compris entre 10 et 50°, de préférence entre 20 et 30°.

Selon une autre variante de l'invention, on incline l'axe principal du récipient en le disposant de façon sensiblement horizontale.

L'invention a également pour objet un produit alimentaire glacé emballé, comprenant un récipient souple et une denrée alimentaire glacée sucrée, notamment un sorbet ou une crème glacée, sensiblement libre d'air, ladite denrée glacée possédant une face libre séparée, par un espace intercalaire, d'une paroi de malaxage du récipient.

Selon d'autres caractéristiques de l'invention :
- l'espace intercalaire occupe entre 10 et 40%, de préférence entre 20 et 30%, du volume total du récipient ;
- la paroi de malaxage est une paroi latérale dudit récipient ;
- s'agissant d'un récipient qui comprend un fond et un goulot, l'espace intercalaire est mis en communication avec le débouché dudit goulot ;
- ladite face libre s'étend de façon oblique lorsque le récipient repose sur son fond, cette face libre étant inclinée d'un angle aigu par rapport à la verticale, notamment compris entre 10 et 50°, de préférence entre 20 et 30° ;
- s'agissant d'un récipient qui comprend un fond et un goulot, ladite face libre est globalement verticale lorsque le récipient repose sur son fond.

L'invention va être décrite ci-dessous, en référence aux dessins annexés, donnés uniquement à titre d'exemple non limitatif et dans lesquels :
- les figures 1 et 2 sont des vues de côté, illustrant une phase de remplissage, selon l'invention, d'un récipient au moyen d'une denrée alimentaire, dans son état liquide ;
- la figure 3 est une vue de côté illustrant une phase d'inclinaison du récipient de la figure 1, conforme à un premier mode de réalisation de l'invention ;
- la figure 4 est une vue de côté, analogue à la figure 3, illustrant le récipient des figures précédentes, contenant la denrée alimentaire dans son état glacé ;
- la figure 5 est une vue de côté illustrant la phase de malaxage du récipient des figures précédentes, contenant la denrée alimentaire dans son état glacé ;
- la figure 6 est une vue de côté illustrant la phase de déversement, hors du récipient, de la denrée alimentaire glacée dans un état déstructuré ;
- la figure 7 est une vue de côté illustrant des phases d'inclinaison d'un récipient, puis de glaçage d'une denrée alimentaire, conformes à un second mode de réalisation de l'invention ; et
- la figure 8 est une vue en coupe transversale selon la ligne VIII-VIII à la figure 7.

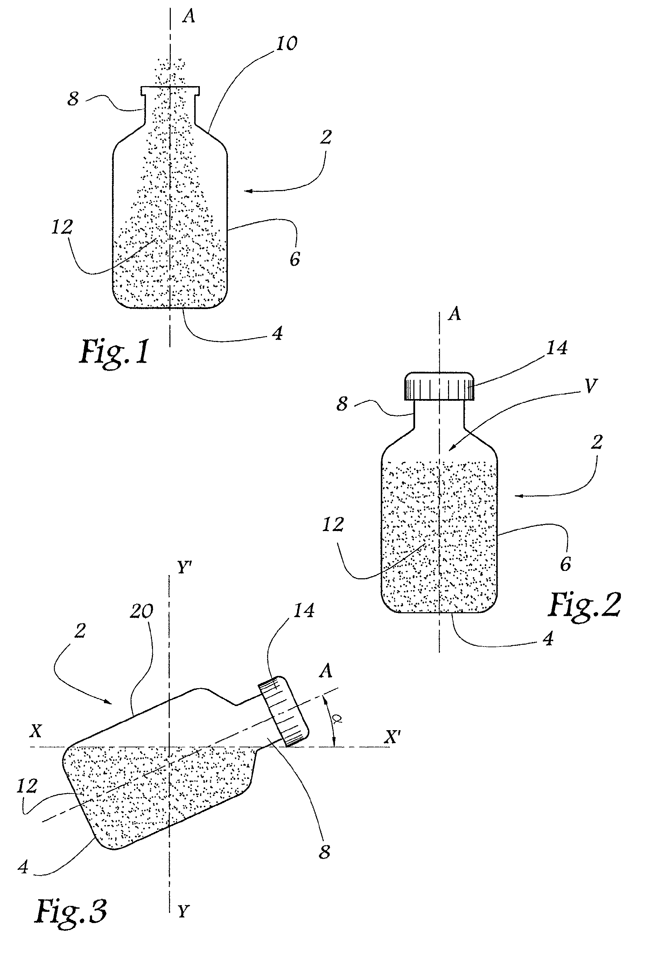

La figure 1 illustre un récipient souple, déformable, désigné dans son ensemble par la référence 2, qui est par exemple réalisé en polyéthylène. Ce récipient comprend un fond 4, à partir duquel s'étendent des parois latérales 6, prolongées par un goulot 8, séparé des parois 6 par un épaulement rentrant 10. La section transversale des parois latérales 6 est circulaire. Ce récipient 2 possède un axe principal A sensiblement vertical, lorsque le récipient repose sur son fond 4 comme cela est illustré aux figures 1 et 2.

Dans une première étape du procédé de l'invention, on remplit le récipient 2 au moyen d'une denrée alimentaire sucrée dans son état liquide, qui est désignée par la référence 12 sur les figures 1 et 2. Cette denrée alimentaire est sensiblement dépourvue d'air.

Comme le montrent les figures 1 et 2, on remplit partiellement le récipient 2 au moyen de la denrée liquide 12, de sorte qu'il subsiste un volume libre V au voisinage du goulot 8, de l'épaulement 10 et de la partie supérieure des parois latérales 6. Une fois la denrée liquide 12 admise dans le récipient 2, on obture le goulot 8 au moyen d'un bouchon 14.

Puis, comme le montre la figure 3, on incline le récipient 2 par rapport à la verticale Y-Y', de sorte que son axe principal A forme un angle aigu α avec l'horizontale X-X'. Cet angle aigu, qui est par exemple compris entre 10 et 50°, est voisin de 25° dans l'exemple représenté.

Etant donné que le récipient a été rempli seulement partiellement, la face supérieure de la denrée liquide s'étend de façon oblique par rapport à l'axe principal A de ce récipient. De façon plus précise, cette face supérieure s'étend à distance de la majeure partie d'une paroi latérale 20 de ce récipient, ainsi que de la paroi supérieure du goulot 8.

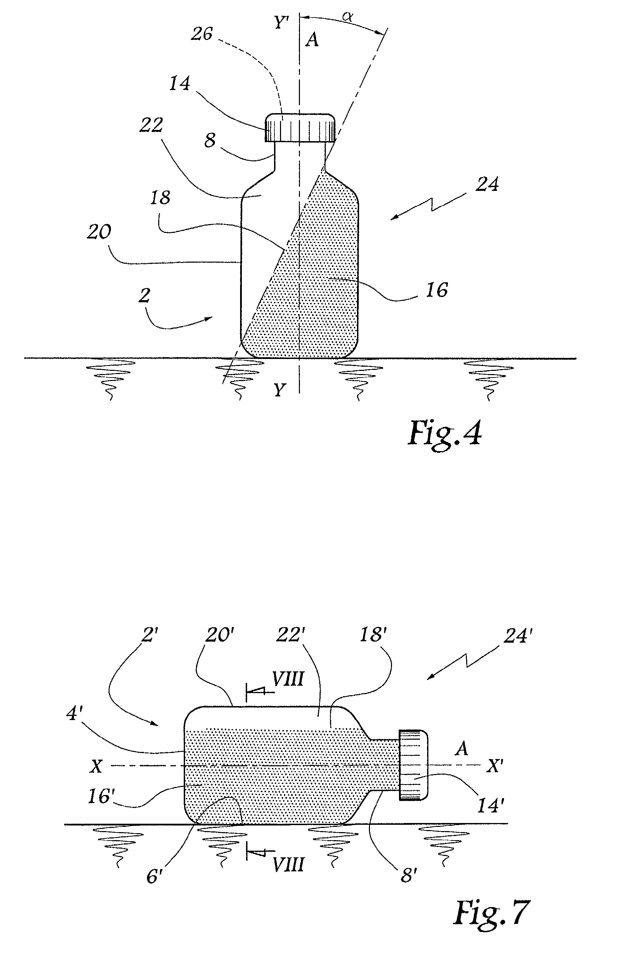

Une fois le récipient placé de façon stable dans sa position illustrée à la figure 3, on procède au refroidissement et donc à la congélation de la denrée alimentaire liquide. Ceci conduit, comme le montre la figure 4, à la formation d'une denrée alimentaire glacée 16, ainsi qu'à l'obtention d'un produit alimentaire glacé emballé 24, comprenant le récipient 2 et la denrée glacée 16. Un tel glaçage est obtenu en plaçant le récipient dans une enceinte ou règne une température d'environ -25°c à -20°C, de sorte que la denrée glacée sucrée, une fois obtenue, possède une température d'environ -18°C. Cette denrée est notamment un sorbet ou une crème glacée.

La denrée glacée 16 possède une face libre 18 s'étendant de façon oblique par rapport à l'axe principal A du récipient. Lorsque ce dernier repose sur son fond 4, cette face libre est inclinée par rapport à la verticale Y-Y' selon l'angle α, auquel il a été fait référence à la figure 3.

Cette face libre 18 s'étend à distance d'une majeure partie de la paroi latérale 20, destinée à former une paroi de malaxage. Cette face 18 et cette paroi 20 définissent un espace intercalaire 22, non occupé par la denrée glacée sucrée, qui est mis en communication avec le volume intérieur du goulot 8, ainsi qu'avec le débouché 26 de ce dernier. La denrée glacée peut cependant remplir jusqu'à environ la moitié du volume intérieur du goulot 8.

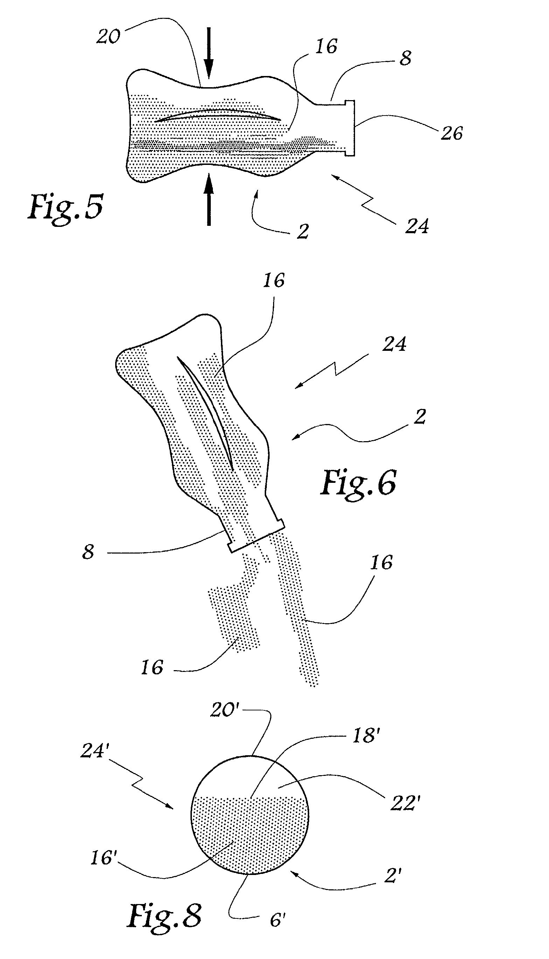

Etant donné que le récipient 2 est réalisé en une matière restant souple à une température de congélation, telle que -20°C, il est possible, après avoir enlevé le bouchon 14, de déformer la paroi de malaxage 20, ainsi que la paroi qui lui est opposée, de manière à exercer sur la denrée glacée 16 une action tendant à la déstructurer. Ce malaxage, illustré à la figure 5, permet de séparer les unes des autres les strates constitutives de cette denrée glacée.

Une fois la denrée glacée entièrement déstructurée, l'utilisateur appuie sur le récipient 2, tout en le retournant, de sorte que cette denrée glacée est à même de s'écouler par gravité au travers du goulot 8, comme le montre la figure 6.

Il est également possible de portionner directement la denrée glacée déstructurée, par exemple au moyen d'une cuillère.

Les figures 7 et 8 illustrent un autre mode de réalisation de l'invention, dans lequel il est fait appel à un récipient 2' identique au récipient 2 de l'exemple précédent. Ce récipient 2' comprend un fond 4', des parois latérales 6', un goulot 8' et un épaulement 10'.

Dans ce mode de réalisation, on remplit le récipient 2' au moyen d'une denrée alimentaire sucrée dans son état liquide, de sorte qu'il subsiste un volume libre au voisinage du goulot 8'. Puis, on obture ce dernier au moyen d'un bouchon 14'. Les étapes décrites immédiatement ci-dessus, qui ne sont pas représentées, sont analogues à celles mises en oeuvre en référence aux figures 1 et 2.

Puis, on incline le récipient 2' d'un angle de 90°, comme le montre la figure 7. De la sorte, son axe principal A' est sensiblement horizontal, le récipient 2' reposant sur ses parois latérales 6'. Etant donné que le récipient a été rempli seulement partiellement, la face supérieure de la denrée liquide s'étend à distance de la paroi latérale en regard du récipient.

On procède ensuite, de façon analogue à l'exemple précédent, au refroidissement et donc à la congélation de la denrée alimentaire liquide. Ceci conduit à la formation d'une denrée alimentaire glacée 16', ainsi qu'à l'obtention d'un produit alimentaire glacé emballé 24', comprenant le récipient 2' et la denrée glacée 16'.

Cette denrée glacée 16' possède une face libre 18' s'étendant de façon globalement parallèle à l'axe A', à savoir horizontale sur le figure 7. Cette face libre 18', qui est donc verticale lorsque le récipient 2' repose sur son fond, s'étend à distance d'une paroi de malaxage 20' du récipient, cette paroi présentant, en coupe transversale, une forme d'arc de cercle (figure 8).

La face libre 18' et la paroi de malaxage 20' définissent un espace intercalaire 22', non occupé par la denrée glacée. Il est alors possible, après avoir enlevé le bouchon 14', de déformer cette paroi de malaxage 20', de façon à exercer sur la denrée glacée 16' une action de déstructuration. Cette dernière est analogue à celle mise en oeuvre en référence aux figures 5 et 6.

L'invention n'est pas limitée à l'exemple décrit et représenté ci-dessus. Ainsi, on peut prévoir que les parois latérales ne soit pas de section transversale circulaire, mais polygonale, notamment carrée. On peut également prévoir que le récipient contenant le produit alimentaire glacé présente d'autres configurations, par exemple une forme de grenade, dont le corps à peu près sphérique est tronqué par un fond plat, opposé au goulot. L'axe principal de ce récipient passe par le goulot et le fond, en étant perpendiculaire à ce dernier. Le récipient peut également être sphérique, son axe principal étant un diamètre passant par le goulot.

## Revendications

1. Procédé de fabrication d'un produit alimentaire glacé emballé, ledit produit emballé comprenant un récipient souple (2 ; 2') et une denrée alimentaire glacée sucrée (16 ; 16'), notamment un sorbet ou une crème glacée, ledit procédé comportant les phases suivantes :
- on déverse ladite denrée alimentaire, sensiblement libre d'air, à l'état liquide (12), dans une partie du récipient souple (2 ; 2'), de manière à ménager un volume libre (V) dans ce récipient,
- on obture ledit récipient (2 ; 2'),
- on incline, par rapport à la verticale (Y-Y'), un axe principal (A ; A') dudit récipient, tout en maintenant la denrée alimentaire dans son état liquide (12), de sorte que la face supérieure de ladite denrée liquide s'étend à distance d'au moins une partie d'une paroi en regard (20 ; 20') du récipient souple (2) ; et
- on refroidit la denrée alimentaire dans la position inclinée dudit récipient, de manière à amener cette denrée dans son état glacé (16 ; 16') et à réaliser une face libre (18 ; 18') de ladite denrée glacée, ladite face libre (18 ; 18') étant séparée de ladite paroi (20 ; 20') en regard du récipient souple (2 ; 2') par un espace intercalaire (22 ; 22').

2. Procédé suivant la revendication 1, **caractérisé en ce qu'**on incline l'axe principal (A) dudit récipient (2) selon un angle aigu (α) par rapport à l'horizontale (X-X'), de sorte que l'espace intercalaire (22) est mis en communication avec un débouché (26) d'un goulot (8) dudit récipient souple (2).

3. Procédé suivant la revendication 2, **caractérisé en ce que** l'angle aigu (α) est compris entre 10 et 50°, de préférence entre 20 et 30°.

4. Procédé suivant la revendication 1, **caractérisé en ce qu'**on incline l'axe principal (A') du récipient (2') en le disposant de façon sensiblement horizontale.

5. Produit alimentaire glacé emballé, comprenant un récipient souple (2 ; 2') et une denrée alimentaire glacée sucrée (16 ; 16'), notamment un sorbet ou une crème glacée, sensiblement libre d'air, ladite denrée glacée (16 ; 16') possédant une face libre (18 ; 18') séparée, par un espace intercalaire (22 ; 22'), d'une paroi de malaxage (20 ; 20') du récipient (2 ; 2').

6. Produit suivant la revendication 5, **caractérisé en ce que** l'espace intercalaire (22 ; 22') occupe entre 10 et 40%, de préférence entre 20 et 30%, du volume total du récipient (2 ; 2').

7. Produit suivant l'une des revendications 5 ou 6, **caractérisé en ce que** la paroi de malaxage (20 ; 20') est une paroi latérale dudit récipient (2 ; 2').

8. Produit suivant l'une des revendications 5 à 7, dans lequel le récipient (2) comprend un fond (4) et un goulot (8), **caractérisé en ce que** l'espace intercalaire (22) est mis en communication avec le débouché (26) dudit goulot (8).

9. Produit suivant la revendication 8, **caractérisé en ce que** ladite face libre (18) s'étend de façon oblique lorsque le récipient (2) repose sur son fond (4), cette face libre étant inclinée d'un angle aigu (α) par rapport à la verticale, notamment compris entre 10 et 50°, de préférence entre 20 et 30°.

10. Produit suivant l'une des revendications 5 à 7, dans lequel le récipient (2') comprend un fond (4') et un goulot (8'), **caractérisé en ce que** ladite face libre (18') est globalement verticale lorsque le récipient (2') repose sur son fond (4').
